# EUROPEAN PATENT APPLICATION

(11) **EP 2 070 455 A1**
(43) Date of publication of application: **17.06.2009**
(21) Application number: 07123276.3
(22) Date of filing: 14.12.2007
(51) Int. Cl.: A47J 31/44, B01F 3/04

(54) **Method for controlling a formation process of froth in a device for frothing a liquid such as milk**

(71) Applicant: Koninklijke Philips Electronics N.V., 5621 BA Eindhoven (NL)
(72) Inventor: The designation of the inventor has not yet been filed
(74) Representative: Smilde-Westmaas, Mariëtte Johanna

(57) **Abstract**

A frothing device (2) comprises a pumping/heating unit (40) and supply lines (10, 20, 30) for supplying a liquid, air and steam to the unit (40). During operation of the device (2), an actual supply of the liquid, the air and the steam to the pumping/heating unit (40) takes place, wherein these fluids get mixed inside the unit (40), so that a hot, frothed liquid is obtained. In the air supply line (20), an air pump (22) is arranged, and features of the air supply are accurately controlled by controlling the operation of this pump (22). As the way in which a frothing process of the liquid is performed is largely influenced by the amount of air that is supplied to the liquid, the frothing device (2) offers the possibility of accurately determining a froth quality, i.e. an amount and a bubble-size of the froth.

## Description

### FIELD OF THE INVENTION

The present invention relates to a device for frothing a liquid such as milk by supplying air to the liquid, and to a device for making a beverage such as cappuccino, comprising the frothing device. Furthermore, the present invention relates to a method for controlling a formation process of froth in a frothing device.

### BACKGROUND OF THE INVENTION

Many coffee making appliances do not only comprise a unit for making coffee, but also a milk frother for making hot, frothed milk, so that the coffee appliances are capable of making beverages on the basis of a mixture of coffee and milk, such as cappuccino. In a commonly known embodiment, the milk frother comprises a pumping/heating unit, wherein means for supplying milk, means for supplying air and means for supplying steam are connected to this unit. The pumping/heating unit may be a so-called venturi unit, which comprises an expansion space, wherein the steam supplying means are connected to the expansion space through a restriction. On the basis of this configuration, it is achieved that when steam is supplied to the expansion space, successive processes of converging and diverging of the steam take place, as a result of which a low pressure zone is generated, under the influence of which both milk and air are sucked into the venturi unit. In this way, it is not necessary to have separate pumps for generating required flows of milk and air. Features of obtained flows of milk and air are largely determined by features of restrictions at locations where the respective supplying means are connected to the venturi unit.

In the above-described known milk frother, milk, air and steam are mixed in the pumping/heating unit, wherein the steam is used for both the purpose of sucking the milk and the air into the unit and the purpose of heating the milk, and also plays a role in pumping the froth that is obtained in the pumping/heating unit toward an outlet of the milk frother. An amount and a bubble-size of the froth are mainly determined by the amount of air that is supplied to the milk. In order to control the amount of air as mentioned, the air supplying means of the milk frother are provided with an air restriction having an adjustable opening for letting through the air. However, the application of an air restriction involves a number of disadvantages. A first disadvantage is related to the fact that the air restriction is a mechanical device which is relatively laborious to manipulate. Therefore, in some appliances, a user has no other option than manually adjusting the restriction in an attempt to realize a desired froth quality, i.e. a desired amount and bubble-size of the froth. A second disadvantage is that there is a chance of the air restriction getting blocked, due to a relatively small dimension of the opening of the restriction. For example, a diameter of the opening may be in a range from 0.10 mm to 0.30 mm.

### SUMMARY OF THE INVENTION

It is an object of the present invention to provide a method for controlling a formation process of froth, which does not require an application of an air restriction, so that the above-mentioned disadvantages of the known milk frother are not applicable to situations in which the method according to the present invention is carried out. This object is achieved by a method for controlling a formation process of froth in a device for frothing a liquid such as milk by supplying air to the liquid, wherein means for pumping air are applied for realizing the air supply, wherein features of the air supply are adapted to obtain a desired quality of the froth, and wherein adapting features of the air supply in this way involves controlling the operation of the means for pumping air.

When the method according to the present invention is applied, a flow of air is not obtained under the influence of a flow of another fluid, as is the case in the above-described known milk frother. Instead, means for pumping air are applied for realizing the air supply. Consequently, it is no longer required to have an air restriction for controlling the air supply, as the features of the air supply, particularly a flow rate, are directly dependent on the operation of the air pumping means. In other words, it is very well possible to control the air supply by controlling the operation of the air pumping means. Hence, a particular aspect of the present invention resides in the fact that the operation of the air pumping means is determined such that it is possible to realize a desired froth quality. Another advantageous aspect of the present invention is that with the omission of an air restriction, there is no small opening in an air supply line, and consequently, there is no risk of hinder of the air supply as a result of a blocked opening.

It is noted that an application of an air pump in a milk frother is known, for example from WO 2004/004523. However, the specific way of controlling the operation of the air pump as proposed by the present invention, wherein the operation of the air pump is determined by taking a desired froth quality into account and choosing features of the operation of the air pump such that this froth quality will actually be obtained constitutes a new way of doing. Prior to performing the method according to the present invention, a relation between features of the operation of the air pump and features of the froth is determined, so that appropriate features of the operation of the air pump may easily be found for any desired froth quality, namely by taking the predetermined relation into account.

Preferably, the means for pumping air are electrically powered, wherein controlling the operation of these means involves controlling the electric power that is supplied to these means. In such a case, a user interface may be provided, which is adapted to setting the level of electric power on the basis of input provided by a user regarding a desired froth quality. Hence, this option may very well be realized in practice, wherein a high user-friendliness is achieved.

The present invention also relates to a device for frothing a liquid such as milk by supplying air to the liquid, comprising an air pump for realizing the air supply, and means for controlling the operation of the pump on the basis of input relating to a desired quality of the froth. Preferably, as has been previously explained, the air pump is an electrically powered pump, wherein the controlling means are adapted to control the operation of the pump by controlling a supply of electric power to the pump.

In a practical embodiment, the device according to the present invention comprises a venturi unit having an expansion space, wherein both means for supplying the air and means for supplying the liquid are connected to the venturi unit, and wherein only the air supplying means are provided with a pump. In this embodiment, on the basis of the functioning of the venturi unit, wherein a flow of one fluid may be obtained under the influence of a flow of another fluid, it is not necessary to apply a separate pump for pumping the liquid. In particular, it is possible to have means for supplying a pumping fluid besides the means for supplying the liquid and the means for supplying the air. An example of a pumping fluid is steam.

According to an advantageous option, when a formation process of froth is stopped, the operation of the means for supplying the pumping fluid is terminated earlier than the operation of the air pump. In this way, it is prevented that liquid is drawn toward the means for supplying the air, among other things, which may otherwise occur under the influence of an under pressure. Hence, it is prevented that the means for supplying the air get contaminated with the liquid. The air pump may be operated such as to function a short time after the supply of pumping fluid is terminated, for an example during a period of half a second, or an even shorter period. This is an easy way of ensuring that the liquid remains in place as soon as it is no longer intended to have a formation process of froth. The above-described and other aspects of the present invention will be apparent from and elucidated with reference to the following description of an embodiment of the device according to the present invention.

### BRIEF DESCRIPTION OF THE DRAWINGS

The present invention will now be explained in greater detail with reference to the figures, in which equal or similar parts are indicated by the same reference signs, and in which:
Figure 1 diagrammatically shows a number of components of a known frothing device, and illustrates the configuration of these components; and
Figure 2 diagrammatically shows a number of components of a frothing device according to the present invention, and illustrates the configuration of these components.

### DETAILED DESCRIPTION OF AN EMBODIMENT

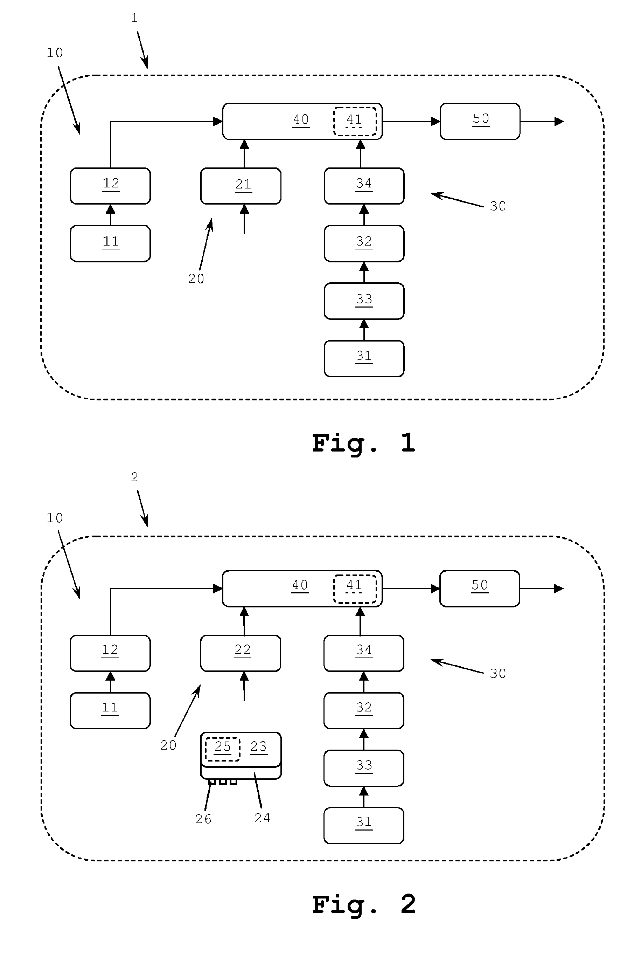

Figure 1 diagrammatically shows a number of components of a known frothing device 1, in particular a device for frothing a liquid on the basis by supplying air to the liquid. In the following, it will be assumed that the frothing device 1 is especially intended for frothing milk, although in principle, it is possible to froth other liquids as well.

The frothing device 1 comprises a supply line 10 for supplying the milk and a supply line 20 for supplying the air to be used in the process of frothing the milk. Furthermore, the frothing device 1 comprises a supply line 30 for supplying steam, wherein all three supply lines 10, 20, 30 join onto a pumping/heating unit 40. One of the functions of the steam supply is heating the frothed milk, so that the frothing device 1 is capable of letting out milk at a temperature which is convenient in view of applications of the milk in a context of hot beverages such as coffee.

The frothing device 1 comprises a milk reservoir 11 for containing the milk to be frothed in the pumping/heating unit 40. The milk reservoir 11 is connected to the pumping/heating unit 40 through a restriction 12.

During operation of the frothing device 1, the air is simply sucked into the pumping/heating unit 40 from the outside, through a restriction 21.

For the purpose of generating steam, the frothing device 1 comprises a water reservoir 31 for containing water and a thermo block 32 for heating water to steam, wherein a pump 33 is provided for pumping the water from the water reservoir 31 to the thermo block 32. Like the milk supply line 10 and the air supply line 20, the steam supply line 30 is connected to the pumping/heating unit 40 through a restriction 34.

In figure 1, a direction of flows of the fluids milk, air, water, steam and frothed milk is indicated by means of arrows. A chamber for letting out the frothed and heated milk is indicated by the reference numeral 50. Naturally, this chamber 50 is located downstream of the pumping/heating unit 40, at an outlet side of the frothing device 1.

Operation of the frothing device 1 involves activation of the pump 33 for displacing water from the water reservoir 31 to the thermo block 32. The thermo block 32 is activated as well, and the water is heated to such an extent that steam is generated. The steam enters the pumping/heating unit 40 through the steam restriction 34.

The pumping/heating unit 40 is designed to function according to the so-called venturi principle. Consequently, the pumping/heating unit 40 comprises an expansion space 41. The steam supply line 30 ends directly in the expansion space 41, and due to the converging-diverging effect of the successive arrangement of the steam restriction 34 and the expansion space 41, pressure energy of the steam is converted to velocity energy, so that a low pressure zone is created inside the pumping/heating unit 40. On the basis of this phenomenon, milk and air are drawn into the pumping/heating unit 40, through the respective restrictions 12, 21, and get entrained by the steam. Furthermore, the milk, air and steam get mixed inside the pumping/heating unit 40, wherein the interaction with the air causes the milk to froth, and wherein the interaction with the steam causes the milk to heat up. On the way to the outlet side of the frothing device 1, the obtained mixture is recompressed under the influence of a conversion of velocity energy back into pressure energy.

Summarizing, during operation of the frothing device 1, the milk and the air are sucked into the pumping/heating unit 40 under the influence of a supply of steam, wherein the steam is used for both pumping purposes and heating purposes. As a result, hot, frothed milk is obtained, which is conveyed to the outlet chamber 50 for further use. Features of the flows of the milk, the air and the steam are determined by various factors, including a size of the respective restrictions 12, 21, 34. An amount and a bubble-size of the obtained froth are mainly determined by the amount of the air that is drawn into the pumping/heating unit 40. Therefore, features of the air restriction 21 constitute an important determining factor in the frothing process, so that an obtained quality of the froth is directly related to these features.

The application of a restriction 21 in the air supply line 20 as known from the prior art, and as described in connection with the known frothing device 1 as shown in figure 1, has several disadvantages. Among other things, it is difficult to manipulate the air restriction 21 and control its size, as this is usually a mechanical device. Furthermore, there is a chance that the air restriction 21 gets blocked, for example by dried up milk. In this respect, it is noted that the dimensions of a cross-section of the air restriction 21 are usually quite small, wherein a diameter may be in a range from 0.10 mm to 0.30 mm, for example. When a frothing process is terminated and the supply of steam is stopped, it may happen that milk is drawn into the air restriction, among other things, due to an under pressure. Each time that this phenomenon occurs, small milk residues dry up in the air restriction, which may eventually cause a blockage.

Figure 2 shows a frothing device 2 according to the present invention, in which an intake of air, and consequently the froth quality, is controlled in a much better way; wherein there is no need to apply a restriction 21 in the air supply line 20. In particular, instead of this air restriction 21, an air pump 22 is used. Hence, the steam is not needed for pumping the air into the pumping/heating unit 40, and the flow of air that is supplied to this unit 40 may be accurately controlled by controlling the operation of the air pump 22. As the way in which the frothing process of the milk is performed is largely influenced by the amount of air that is supplied to the milk, the device 2 according to the present invention offers the possibility of accurately determining the froth quality.

In a practical embodiment of the device 2 according to the present invention, the air pump 22 is an electrically powered pump, and a combination of a microcontroller 23 and a user interface 24 is provided for controlling the electric power that is supplied to the pump 22. Various froth qualities may simply be set by a user of the frothing device 2, as the features of processes for obtaining these particular froth qualities, especially the features of the operation of the air pump 22, may be predetermined and stored in a memory 25 of the microcontroller 23, wherein the user interface 24 comprises buttons 26 or the like for addressing one of the predetermined options.

As it is far easier to control an electrically powered air pump 22 than a mechanical air restriction 21, the present invention constitutes an important contribution to the art. Among other things, a froth quality may more accurately be set and obtained, and a much higher user-friendliness may be realized, wherein all that a user needs to do is push a right button (or other suitable input component) for the purpose of setting desired features of the frothed liquid to be made by the frothing device 2.

Preferably, the microcontroller 23 is adapted to letting the air pump 22 function a short time after a frothing process is terminated and a steam supply is stopped. In this way, it is ensured that there is no under pressure at the end of the frothing process, so that there is no suction effect on the milk, and the air supply line 20 remains clean. The time during which the air pump 22 is functioning after the steam supply has stopped may be relatively short, and may be less than half a second.

The frothing device 2 according to the present invention may be a separate appliance, but may also be part of a device for making a beverage such as cappuccino.

It will be clear to a person skilled in the art that the scope of the present invention is not limited to the examples discussed in the foregoing, but that several amendments and modifications thereof are possible without deviating from the scope of the present invention as defined in the attached claims.

For example, the frothing device 2 according to the present invention does not necessarily need to be equipped with a reservoir 11 for containing a liquid to be frothed. Alternatively, it is also possible that the liquid supply line 10 of the frothing device 2 is connectable to an outlet of a cartridge, carton, bottle or the like for containing the liquid. Furthermore, the steam may be generated and supplied in any suitable way, wherein it is not essential that a combination of a water reservoir 31, a thermo block 32 and a pump 33 is applied.

While the present invention has been illustrated and described in detail in figure 2 and the description, such illustration and description are to be considered illustrative or exemplary only, and not restrictive. The present invention is not limited to the disclosed embodiment.

Variations to the disclosed embodiment can be understood and effected by a person skilled in the art in practicing the claimed invention, from a study of the figures, the description and the attached claims. In the claims, the word "comprising" does not exclude other steps or elements, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope of the present invention.

Summarizing, a frothing device 2 comprises a pumping/heating unit 40 and supply lines 10, 20, 30 for supplying a liquid, air and steam to the unit 40. During operation of the device 2, an actual supply of the liquid, the air and the steam to the pumping/heating unit 40 takes place, wherein these fluids get mixed inside the unit 40, so that a hot, frothed liquid is obtained. In the air supply line 20, an air pump 22 is arranged, and features of the air supply are accurately controlled by controlling the operation of this pump 22. As the way in which a frothing process of the liquid is performed is largely influenced by the amount of air that is supplied to the liquid, the frothing device 2 offers the possibility of accurately determining a froth quality, i.e. an amount and a bubble-size of the froth.

## Claims

1. Method for controlling a formation process of froth in a device (2) for frothing a liquid such as milk by supplying air to the liquid, wherein means (22) for pumping air are applied for realizing the air supply, wherein features of the air supply are adapted to obtain a desired quality of the froth, and wherein adapting features of the air supply in this way involves controlling the operation of the means (22) for pumping air.

2. Method according to claim 1, wherein the means (22) for pumping air are electrically powered, and wherein controlling the operation of these means (22) involves controlling the electric power that is supplied to these means (22).

3. Device (2) for frothing a liquid such as milk by supplying air to the liquid, comprising an air pump (22) for realizing the air supply, and means (23) for controlling the operation of the pump (22) on the basis of input relating to a desired quality of the froth.

4. Device (2) according to claim 3, wherein the air pump (22) is an electrically powered pump, and wherein the controlling means (23) are adapted to control the operation of the pump (22) by controlling a supply of electric power to the pump (22).

5. Device (2) according to claim 3, comprising a venturi unit (40) having an expansion space (41), wherein both means (20) for supplying the air and means (10) for supplying the liquid are connected to the venturi unit (40), and wherein only the air supplying means (20) are provided with a pump (22).

6. Device (2) according to claim 5, further comprising means (30) for supplying a pumping fluid such as steam besides the means (10) for supplying the liquid and the means (20) for supplying the air to the venturi unit (40).

7. Device (2) according to claim 6, wherein the controlling means (23) are adapted to terminate the operation of the means (30) for supplying the pumping fluid before terminating the operation of the air pump (22) at the end of a formation process of froth.

8. Device for making a beverage such as cappuccino, comprising a device (2) according to claim 3.
